# EUROPÄISCHE PATENTSCHRIFT

(11) **EP 0 678 565 B1**
(45) Veröffentlichungstag und Bekanntmachung des Hinweises auf die Patenterteilung: **10.02.1999**
(21) Anmeldenummer: 95105348.7
(22) Anmeldetag: 08.04.1995
(51) Int. Cl.: C09K 3/18

(54) **Polymerverdicktes Enteisungsmittel und Vereisungsschutzmittel für Flugzeuge**
De-icing and anti-icing compositions for aircrafts, thickened by a polymer
Compositions dégivrantes et antiverglas pour avions, épaissies par un polymère

(30) Priorität: 14.04.1994 DE 4412790
(43) Veröffentlichungstag der Anmeldung: 25.10.1995
(73) Patentinhaber: Clariant GmbH, 65929 Frankfurt am Main (DE)
(72) Erfinder: Pöllmann, Klaus, Dr., D-84489 Burghausen (DE)

(56) Entgegenhaltungen:
- EP-A- 0 231 869
- EP-A- 0 317 410
- DE-A- 1 901 061
- FR-A- 2 057 577

## Beschreibung

Die Erfindung betrifft ein Enteisungs- und Vereisungsschutzmittel für Flugzeuge auf der Basis von Glykolen und Wasser und mit wasserlöslichen vernetzten Acrylpolymeren als Verdicker.

Enteisungs- und Vereisungsschutzmittel für Flugzeuge (im folgenden der Kürze halber einfach Enteisungsmittel oder Enteisungsflüssigkeiten genannt) werden zur Entfernung von Eis, Schnee und/oder Reif von bestimmten Flugzeugoberflächen und zur Vermeidung derartiger Ablagerungen auf diesen Flächen eingesetzt. Die Zeitspanne, in der die Enteisungsflüssigkeit Schutz gegen die Wiederbildung von Eis, Schnee und/oder Reif am Flugzeug gibt, wird als Wiedervereisungsschutzzeit oder Holdovertime bezeichnet. In "Recommendations for De-/Anti-Icing of Aircraft on the Ground" (Edition März 1993) der Association of European Airlines (AEA) und in den International Standardisation Organisation (ISO) Spezifikationen 11075, 11076 und 11078 werden zwei Typen von Flugzeugenteisungsflüssigkeiten spezifiziert. Typ-I-Flüssigkeiten bestehen im wesentlichen aus Glykol, Wasser und Korrosionsinhibitoren sowie gegebenenfalls Tensiden und pH-Wert-Regulatoren und Typ-II-Flüssigkeiten enthalten zusätzlich dazu ein wasserlösliches Polymer als Verdickungsmittel zur Erreichung einer hochviskosen pseudoplastischen Konsistenz.

Von Flugzeugenteisungsmitteln vom genannten Typ II wird insbesondere erwartet, daß sie einen möglichst langen Schutz gegen Wiedervereisung der Tragflächen vor dem Start unter extremen Wetterbedingungen wie Schneefall oder gefrierendem Regen und gutes Abfließen vom Rumpf der Tragflächen beim Start des Flugzeuges aufweisen. So fordert die ISO-Norm 11078, die 1993 in Kraft getreten ist, hinsichtlich Schutzzeit gegen Wiedervereisung mindestens 30 Minuten bei -5 °C im sogenannten "Water Spray Endurance Test" (die Enteisungsflüssigkeit wird vorher 5 Minuten lang einer Scherbelastung von 3500 Umdrehungen pro Minute ausgesetzt). Bezüglich Abfließverhalten wird in ISO 11078 erstmals ein Labortest beschrieben, der sogenannte "Aerodynamic Acceptance Test", der eine Maximaldicke (Boundary Layer Displacement Thickness, d∗) des zurückbleibenden Enteisungsmittelfilms nach einem simulierten Start von höchstens 10 mm bei -30 °C und von höchstens 9,5 mm bei -10 °C vorschreibt.

Die Holdovertime und das Abfließverhalten eines Typ-II-Enteisungsmittels werden entscheidend durch das Verdickungsmittel beeinflußt. Das Auffinden eines guten Polymerverdickers wird unter anderem dadurch erschwert, daß die beiden Eigenschaften, Holdovertime und Abfließverhalten, im wesentlichen konträr zueinander sind.

Polymerverdickte Flugzeugenteisungsmittel werden zum Beispiel in DE-A-24 23 893 (Derwent-Referat AN 83335W) sowie in EP-B-0 050 700 (US-A-4 358 389), EP-B-0 231 869 (US-A-4 744 913) und EP-B-0 360 183 beschrieben. Sie bestehen im wesentlichen aus
a) 35 bis 70 Gew.-% von mindestens einem Glykol aus der Gruppe der Alkylenglykole mit 2 bis 3 C-Atomen und Oxalkylenglykole mit 4 bis 6 C-Atomen,
b) 0,05 bis 1,5 Gew.-% von mindestens einem wasserlöslichen Polymeren als Verdickungsmittel,
c) 0,02 bis 1,5 Gew.-% von mindestens einem Tensid aus der Gruppe der anionischen und nichtionischen Tenside,
d) mindestens einem Korrosionsinhibitor in einer wirksamen Menge,
e) mindestens einer basischen Verbindung aus der Gruppe der Alkalimetallcarbonate, Alkalimetallhydroxide und Amine zur Einstellung eines pH-Wertes von 7 bis 11 und
f) Wasser als Restmenge auf 100 Gew.-%,
Gewichtsprozente bezogen auf das (fertige) Enteisungsmittel.

Das in DE-A-24 23 893 beschriebene Enteisungs- und Vereisungsschutzmittel für Flugzeugoberflächen enthält als Verdicker wasserlösliche vernetzte oder unvernetzte Homo- oder Copolymerisate von Acrylsäure oder Methacrylsäure, wobei das Comonomere in einer Menge von 5 bis 70 Mol-% (bezogen auf das gesamte Monomerengemisch) vorliegen kann. Als Comonomere werden Methyl-, Ethyl- oder Butylester der Acryl-, Methacryl- oder Maleinsäure, Vinylacetat, Styrol, niedrige Olefine und Acryl- oder Methacrylamide genannt. In EP-B-0 360 183 werden als Verdickungsmittel wasserlösliche vernetzte Polyacrylsäureprodukte und in EP-B-0 050 700 zusätzlich dazu auch wasserlösliche vernetzte Copolymere von Acrylsäure oder Methacrylsäure mit einem Comonomeranteil von 2 bis 50 Gew.-% (bezogen auf das Copolymere) empfohlen; über die Art des Comonomeren wird nichts weiteres gesagt. In EP-B-0 231 869 wird als Verdickungsmittel ein Gemisch bestehend im wesentlichen aus einem wasserlöslichen vernetzten Acrylsäurehomopolymeren und einem Copolymeren von Acrylsäure und Acrylamid eingesetzt. Die beschriebenen bekannten Verdickungsmittel verleihen den Flugzeugenteisungsmitteln ein gewisses pseudoplastisches Verhalten, das heißt eine relativ hohe Viskosität (Ruheviskosität, Fließgrenze oder "yield value" genannt), die bei Scherbeanspruchung abnimmt. Auf diese Weise soll eine gute Holdovertime bei gleichzeitig ausreichendem Abfließverhalten erreicht werden. Die Anforderungen der Spezifikation ISO 11078 sind jedoch so weitgehend, daß die beschriebenen Verdickungsmittel entweder nur eine ausreichende Holdovertime (infolge hoher Ruheviskosität) herbeiführen, die Anforderungen hinsichtlich Abfließverhalten aber nicht erfüllen, oder nur ein ausreichendes Abfließverhalten herbeiführen (infolge niedrig eingestellter Ruheviskosität), dann aber die Anforderungen hinsichtlich Holdovertime nicht erfüllen. Die beschriebenen bekannten Polymerverdicker vermögen also die in ISO 11078 vorgeschriebene "Water Spray Endurance Time" und die ebenfalls in ISO 11078 neu festgelegte Begrenzung der "Boundary Layer Displacement Thickness" im "Aerodynamic Acceptance Test" nicht gleichzeitig zu erfüllen.

Als Stand der Technik sei noch die neuere Druckschrift WO 93/24543 erwähnt, worin spezielle Makromonomere enthaltende lineare oder vernetzte Polycarboxylate als Verdicker für Flugzeugenteisungsflüssigkeiten vom Typ II beschrieben werden. Das Makromonomere enthält einen hydrophoben Endrest aus der Gruppe der Alkaryle und ist mit Hilfe eines Bindegliedes mit dem Polycarboxylat (Polyacrylat, Polymethacrylat und dergleichen) verbunden (vergleiche zum Beispiel Seiten 9 und 19). Dieser Polymerverdicker verlangt also relativ kompliziert aufgebaute Monomere und ist nur über mehrere Reaktionsstufen herstellbar.

Wie oben erwähnt sind die beiden Eigenschaften, Holdovertime und Abfließverhalten, zueinander konträr. Um ein ausreichendes Abfließverhalten zu erreichen, ist die Viskosität und damit die Konzentration an Verdickungsmittel möglichst gering zu wählen. Eine ausreichende Holdovertime erfordert andererseits eine möglichst hohe Fließgrenze des Enteisungsmittels und damit im allgemeinen eine hohe Viskosität und hohe Verdickerkonzentration.

Die Aufgabe der Erfindung besteht demnach darin, einfach aufgebaute und leicht herstellbare Verdickerpolymere zu finden, die im fertigen Flugzeugenteisungsmittel eine erhöhte Pseudoplastizität, das heißt stärkere Abnahme der Viskosität mit zunehmender Scherbelastung, herbeiführen und dadurch bei Scherbelastung, trotz hoher Ruheviskosität, deutlich schneller dünnflüssig werden und so besser abfließen. Das neue Enteisungsmittel mit gesteigerter Pseudoplastizität soll aufgrund seiner ausreichend hohen Ruheviskosität den "Water Spray Endurance Test" erfüllen und durch das schnellere Abfließen im Windkanal oder beim Start gleichzeitig die erforderlichen niedrigen Werte der "Boundary Layer Displacement Thickness" im "Aerodynamic Acceptance Test" erreichen. Das neue Flugzeugenteisungsmittel vom Typ II soll also auf einem einfachen und leicht zugänglichen Polymerverdicker beruhen und die Forderungen der ISO-Norm 11078 bezüglich Holdovertime und Abfließverhalten in hohem Ausmaß erfüllen.

Es wurde gefunden, daß wasserlösliche vernetzte Copolymere aus Acrylsäure oder Methacrylsäure als Hauptmonomeres und einem Ester oder Amid der Acrylsäure oder Methacrylsäure mit einem langen Alkylrest in der Estergruppe und einem oder zwei langen Alkylresten in der Amidgruppe als dem zweiten Monomeren eine besonders ausgeprägte Pseudoplastizität aufweisen und Flugzeugenteisungsmittel vom Typ II mit der oben geforderten Eigenschaftkombination ergeben.

Die Erfindung betrifft ein Enteisungs- und Vereisungsschutzmittel für Flugzeuge auf der Basis von Glykolen und Wasser und mit wasserlöslichen vernetzten Acrylpolymeren als Verdicker, dadurch gekennzeichnet, daß der Verdicker ein wasserlösliches vernetztes Copolymer ist, bestehend im wesentlichen aus 85 bis 99 Gew.-%, vorzugsweise 90 bis 98 Gew-%, polymerisierten Einheiten von Acrylsäure oder Methacrylsäure und 1 bis 15 Gew.-%, vorzugsweise 2 bis 10 Gew-% von einem Ester oder Amid der Acrylsäure oder Methacrylsäure, wobei letztere durch die Formeln 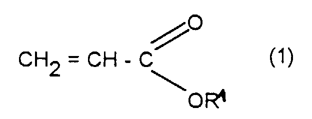 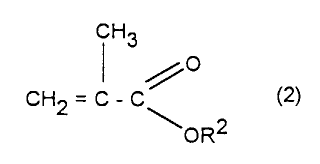 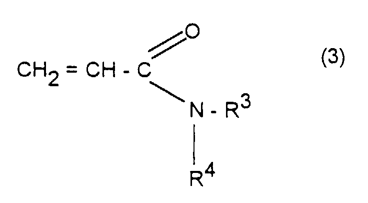 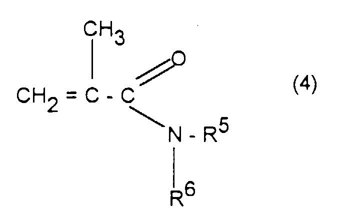 wiedergegeben werden, in denen
R¹, R², R³, R⁵ C₆- bis C₂₂-Alkyl, insbesondere C₁₀ bis C₁₈-Alkyl und ganz besonders C₁₀ bis C₁₄-Alkyl.
R⁴, R⁶ einen Alkylrest mit 1 bis zu 4 Kohlenstoffatomen bedeuten, wobei die Gewichtsprozente auf das Copolymerisat bezogen sind.

Die Alkylreste können gerade oder verzweigt sein, sie sind vorzugsweise gerade. Von den beiden Zweitmonomeren sind die Esterverbindungen bevorzugt.

Das erfindungsgemäße Flugzeugenteisungsmittel enthält im allgemeinen 0,05 bis 1,5 Gew.-%, vorzugsweise 0,1 bis 1 Gew.-%, von mindestens einem der beschriebenen Copolymeren, Gewichtsprozente bezogen auf das (fertige) Enteisungsmittel.

Die erfindungsgemäß einzusetzenden Copolymeren sind bekannt und im Handel erhältlich. Sie werden durch Copolymerisation der angegebenen Monomeren in Gegenwart von Vernetzern hergestellt. Derartige Copolymerisationen sind zum Beispiel in der eingangs genannten US-A-4 744 913 ausführlich beschrieben. Eine weitere Herstellungsmethode basiert darauf, daß man zunächst ein Acrylsäure- oder Methacrylsäure-Homopolymerisat bereitet und dieses dann der angegebenen Veresterung oder Amidierung unterwirft. Es versteht sich von selbst, daß das Hauptmonomere, Acrylsäure oder Methacrylsäure, auch in Form der entsprechenden Acrylate, vorzugsweise Alkalimetallacrylate (das Alkalimetall ist vorzugsweise Kalium oder Natrium) mit dem zweiten Monomeren, dem Ester oder Amid, polymerisiert werden kann (nur der Einfachheithalber wird von Acrylsäure und Methacrylsäure allein gesprochen). Von den in US-A-4 744 913 genannten Vernetzern sind auch hier jene aus der Gruppe der polyungesättigten Ether bevorzugt, wobei besonders bevorzugt sind der Diallylether, Di- oder Triallylglycerinether, Di- oder Triallyl-trimethylolethanether, Di- oder Triallyl-trimethylolpropanether, Tetraallyloxethan und Di-, Tri-, Tetra-, Penta- oder Hexaallylether von Zuckeralkoholen sowie die entsprechenden Methallylether. Die Menge an Vernetzer im Copolymeren beträgt im allgemeinen 0,01 bis 10 Gew.-%, vorzugsweise 0,1 bis 1 Gew.-%, bezogen auf das Copolymere. Das erfindungsgemäß einzusetzende wasserlösliche Copolymere besteht demnach unter Einbeziehung der Vernetzermenge im wesentlichen aus polymerisierter Acrylsäure oder Methacrylsäure als Hauptbestandteil, einer kleineren Menge aus polymerisiertem zweiten Monomeren und einer ebenfalls kleineren Menge aus polymerisiertem Vernetzer. Ein bevorzugtes Copolymer besteht unter Einbeziehung der Vernetzermenge im wesentlichen aus 75 bis 98,99 Gew.-%, vorzugsweise 89 bis 97,9 Gew.-%, polymerisierter Acrylsäure oder Methacrylsäure, 1 bis 15 Gew.-%, vorzugsweise 2 bis 10 Gew.-%, polymerisierter Esterverbindung oder Amidverbindung und 0,01 bis 10 Gew.-%, vorzugsweise 0,1 bis 1 Gew.-%, polymerisiertem Vernetzer, Gewichtsprozente bezogen auf das (fertige) Copolymere.

Die erfindungsgemäße Enteisungsflüssigkeit enthält neben dem beschriebenen Verdicker vor allem Glykole und Wasser und zusätzlich dazu vorzugsweise auch noch Tenside, Korrosionsinhibitoren und, falls erforderlich, pH-Regulatoren zur Einstellung eines pH-Wertes von 7 bis 11, vorzugsweise 7,5 bis 9.

Als Glykole enthält die erfindungsgemäße Enteisungsflüssigkeit vorzugsweise solche aus der Gruppe der Alkylenglykole mit 2 bis 3 C-Atomen und Oxalkylenglykole mit 4 bis 6 C-Atomen. Bevorzugte Glykolverbindungen sind Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt sind. Die Glykole dienen vor allem zur Erniedrigung des Gefrierpunktes und stellen neben Wasser die Hauptkomponente der Flüssigkeit dar. Als Wasser wird vorzugsweise vollentsalztes Wasser eingesetzt.

Als Tenside werden vorzugsweise Fettalkoholalkoxylate oder Arylalkylsulfonate oder eine Mischung davon eingesetzt. Das Alkoxylat ist vorzugsweise ein solches mit 1 bis 10, vorzugsweise 1 bis 5 Ethylenoxid-Einheiten, Propylenoxid-Einheiten oder einer Mischung davon, wobei Ethylenoxid allein bevorzugt ist. Der Alkylrest im Fettalkohol enthält im allgemeinen 6 bis 22 C-Atomen, vorzugsweise 8 bis 18 C-Atomen, und kann gerade oder verzweigt sein, wobei gerade bevorzugt ist, und gesättigt oder ungesättigt mit vorzugsweise 1 bis 3 Doppelbindungen. Als Beispiele seien genannt: Octyl-, Decyl-, Dodecyl-, Isotridecyl- und Stearylalkohol, ferner Oleyl-, Cocosalkyl- und Talgalkylalkohol sowie ein Fettalkoholgemisch mit einem C₁₂-Alkylrest und C₁₄-Alkylrest (C₁₂/C₁₄-Fettalkohol) ethoxyliert mit 1 bis 5 mol Ethylenoxid. Das Alkarylsulfonat ist vorzugsweise Kalium- und/oder Natrium-alkylarylsulfonat mit einer oder mehreren, vorzugsweise einer oder zwei, Sulfonat-Gruppen (SO₃K- oder SO₃Na-Gruppen), einer oder mehreren, vorzugsweise einer oder zwei, Alkylgruppen mit 5 bis 18 C-Atomen, vorzugsweise 12 bis 18 C-Atomen, und einem oder mehreren, vorzugsweise einem oder zwei, Benzolringen. Bevorzugt sind Alkalimetall-(Kalium- und/oder Natrium)-alkylbenzolsulfonate mit 12 bis 18 C-Atomen in der Alkylgruppe. Da bei der Herstellung von Alkylarylsulfonaten auch von Kohlenwasserstoffgemischen ausgegangen wird, wie sie beispielsweise bei der Erdölaufbereitung als Fraktionen anfallen, kann die Alkylgruppe auch derartige Gemische darstellen. Dabei beträgt die Anzahl der Kohlenstoffatome vorzugsweise 12 bis 18 (das ist eine mittlere Anzahl von 15).

Als Korrosionsinhibitoren können die für Flüssigkeiten auf der Basis von Gykolen und Wasser gebräuchlichen Verbindungen eingesetzt werden. Geeignete Korrosionsinhibitoren sind Alkalimetallphosphate, Niedrig-Alkylphosphate wie Ethylphosphat, Dimethylphosphat, Isopropylphosphat und dergleichen, Imidazole wie 1H-Imidazol, Methylimidazol, Benzimidazol und dergleichen und Triazole wie Benzotriazol und Tolyltriazol, wobei die Triazole bevorzugt sind.

Zur Einstellung des pH-Wertes von 7 bis 10, vorzugsweise 7,5 bis 9, werden basische Verbindungen eingesetzt. Bevorzugt sind solche aus der Gruppe der Alkalimetallhydroxide wie NaOH und KOH, der Alkylamine wie Butylamin, Hexylamin, Octylamin und Isononylamin und der Alkanolamine wie Mono-, Di- und Triethanolamin. Die Alkalimetallhydroxide sind besonders bevorzugt.

Die Herstellung des erfindungsgemäßen Enteisungsmittels und Vereisungsschutzmittels erfolgt durch Zusammenmischen der einzelnen (bekannten und im Handel erhältlichen) Komponenten in beliebiger Reihenfolge, was zum Beispiel in einem mit Rührer ausgestatteten Behälter vorgenommen werden kann.

Unter Berücksichtigung aller oben beschriebenen Komponenten besteht die erfindungsgemäße Enteisungsflüssigkeit im wesentlichen aus
a) 35 bis 70 Gew.-%, vorzugsweise 40 bis 60 Gew.-%, von mindestens einem Glykol aus der Gruppe der Alkylenglykole mit 2 bis 3 C-Atomen und Oxalkylenglykole mit 4 bis 6 C-Atomen,
b) 0,05 bis 1,5 Gew.-%, vorzugsweise 0,1 bis 1 Gew.-%, von mindestens einem wasserlöslichen vernetzten Copolymeren der beschriebenen Art als Verdicker,
c) 0,02 bis 1,5 Gew.-%, vorzugsweise 0,05 bis 1 Gew.-%, von mindestens einem Tensid aus der Gruppe der Fettalkoholalkoxylate und Arylalkylsulfonate wie oben beschrieben,
d) 0,01 bis 1 Gew.-%, vorzugsweise 0,03 bis 0,7 Gew.-%, von mindestens einem Korrosionsinhibitor für Flüssigkeiten auf der Basis von Glykolen und Wasser,
e) mindestens einer basischen Verbindung zur Einstellung eines pH-Wertes von 7 bis 11 und
f) Wasser als Rest auf 100 Gew.-%,
Gewichtsprozente bezogen auf das Mittel.

Wie oben erwähnt, soll das erfindungsgemäß einzusetzende Copolymerisat wasserlöslich sein. Wasserlöslichkeit liegt dann vor, wenn beim Auflösen von bis zu 10 g Copolymerisat in 1000 g Wasser bei etwa 20 °C nach Einstellen eines pH-Wertes von 7 mit einem Alkalimetallhydroxid eine klare Lösung erhalten wird. Als weitere Eigenschaft weist das Copolymere in einer 0,2gew.%igen wäßrigen Lösung von 20 °C und einem pH-Wert von 7 (eingestellt mit Alkalimetallhydroxid, falls ein solcher pH-Wert nicht ohnehin vorliegt) eine Viskosität von 1000 bis 20000 mPas auf, gemessen mit einem Brookfield-Viskosimeter bei 20 Umdrehungen pro Minute (Upm).

Die erfindungsgemäße Enteisungsflüssigkeit vom Typ II erfüllt die eingangs geschilderten Forderungen in einem hohen Ausmaß. Mit dem neuen Verdicker wird auch im Falle einer hohen Ruheviskosität (Fließgrenze) der Enteisungsflüssigkeit, die eine lange Holdovertime gewährleistet, ein unerwartet gutes Abfließverhalten erreicht. Mit dem neuen Verdicker ist es also möglich, den Gegensatz in den beiden Eigenschaften, Holdovertime und Abfließverhalten, aufzuheben. Dieses überraschende Ergebnis resultiert offensichtlich von dem unerwartet ausgeprägten pseudoplastischen Verhalten des beschriebenen Verdickers, das zu einer markanten Abnahme der Viskosität bei zunehmender Scherung und dadurch zu den geforderten geringen Schichtdicken des Enteisungsmittelfilms im "Aerodynamic Acceptance Test" führt.

Die Erfindung wird mit den folgenden erfindungsgemäßen Beispielen 1 und 2 und mit einem Vergleichsbeispiel noch näher erläutert.

### Beispiel 1

Es wurde ein Typ-II-Flugzeugenteisungsmittel mit der folgenden Zusammensetzung und gemäß folgendem Vorgehen hergestellt:

| | |
|---|---|
| 50,00 Gew.-% | 1,2-Propylenglykol |
| 0,05 Gew.-% | Benzotriazol |
| 0,40 Gew.-% | Dodecylbenzolsulfonat-Natriumsalz |
| 0,10 Gew.-% | Fettalkoholethoxylat mit 12 bis 14 C-Atomen im Fettalkohol und mit 2 mol Ethylenoxid ethoxyliert |
| 0,30 Gew.-% | vernetztes Acrylsäure/Dodecylmethacrylat-Copolymer aus 96,5 Gew.-% polymerisierter Acrylsäure und 3,5 Gew.-% polymerisiertem Methacrylsäuredodecylester |
| 0,093 Gew.-% | Natriumhydroxid |
| 0,019 Gew.-% | Kaliumhydroxid |
| 49,038 Gew.-% | Wasser. |

Das Copolymere sowie Benzotriazol und die Tenside wurden im Wasser durch starkes Rühren bei 20 °C gelöst. Anschließend wurde das 1,2-Propylenglykol zugegeben und mit Natrium- und Kaliumhydroxid (jeweils in Form einer etwa 10gew.%igen wäßrigen Lösung) der pH-Wert auf 7 bis 7,4 eingestellt.

Das erhaltene Enteisungsmittel wurde bezüglich Viskosität, "Water Spray Endurance Time" und "Boundary Layer Displacement Thickness, d*" im "Aerodynamic Acceptance Test" getestet. Die Ergebnisse sind in den nachstehenden Tabellen 1 und 2 zusammengefaßt:

**Tabelle 1**

| Viskositätswerte bei 0 °C und 0,084, 0,84, 8,4 und 16,8 s⁻¹ Schergeschwindigkeit und Abnahme der Viskosität bei den genannten ansteigenden Schergeschwindigkeiten, ausgedrückt in Prozent, bezogen auf den Viskositätswert bei 0,084 s⁻¹ Schergeschwindigkeit. | | | | |
|---|---|---|---|---|
| Schergeschwindigkeit [s⁻¹] | 0,084 | 0,84 | 8,4 | 16,8 |
| Viskosität [mPas] | 5000 | 1500 | 630 | 500 |
| Viskositätsabnahme [%] | 0 | 70,0 | 87,4 | 90,0 |

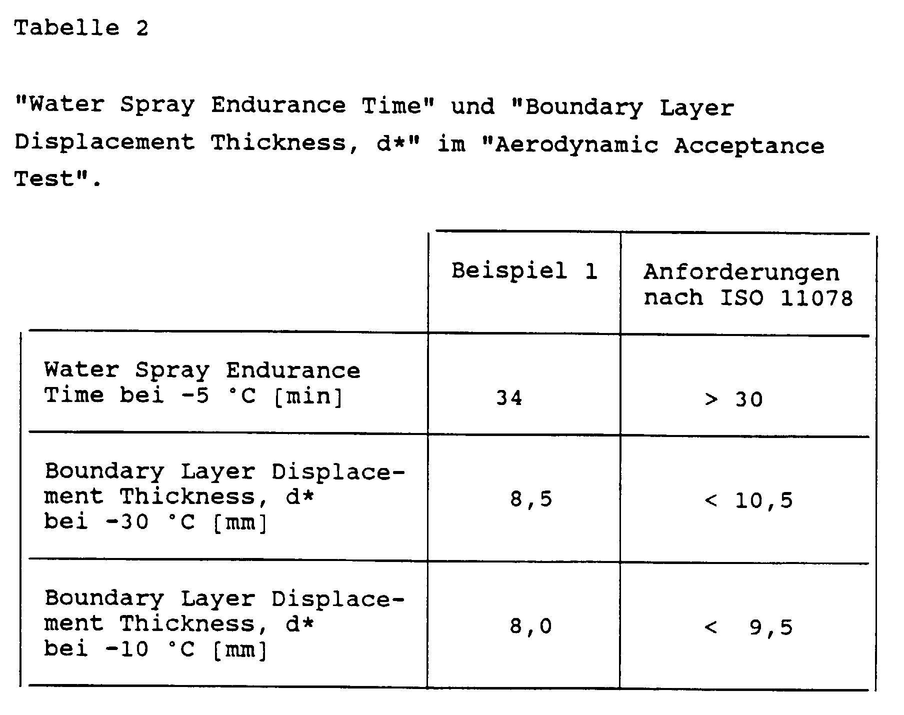

### Beispiel 2

Es wurde ein Typ-II-Flugzeugenteisungsmittel mit der folgenden Zusammensetzung wie in Beispiel 1 hergestellt:

| | |
|---|---|
| 51,00 Gew.-% | 1,2-Propylenglykol |
| 0,05 Gew.-% | Tolyltriazol |
| 0,40 Gew.-% | Dodecylbenzolsulfonat-Natriumsalz |
| 0,33 Gew.-% | vernetztes Acrylsäure/Octadecylmethacrylat-Copolymer aus 95 Gew.-% polymerisierter Acrylsäure und 5 Gew.-% polymerisiertem Methacrylsäureoctadecylester |
| 0,118 Gew.-% | Natriumhydroxid (in Form einer etwa 10gew.%igen Lösung) |
| 48,102 Gew.-% | Wasser. |

Das erhaltene Enteisungsmittel (pH-Wert 7,2) wurde wie in Beispiel 1 getestet. Die Ergebnisse sind in den nachstehenden Tabellen 3 und 4 zusammengefaßt:

**Tabelle 3**

| Viskositätswerte bei 0 °C und 0,084, 0,84, 8,4 und 16,8 s⁻¹ Schergeschwindigkeit und Abnahme der Viskosität bei den genannten ansteigenden Schergeschwindigkeiten, ausgedrückt in Prozent, bezogen auf den Viskositätswert bei 0,084 s⁻¹ Schergeschwindigkeit. | | | | |
|---|---|---|---|---|
| Schergeschwindigkeit [s⁻¹] | 0,084 | 0,84 | 8,4 | 16,8 |
| Viskosität [mPas] | 7400 | 2450 | 910 | 680 |
| Viskositätsabnahme [%] | 0 | 67,0 | 87,8 | 90,8 |

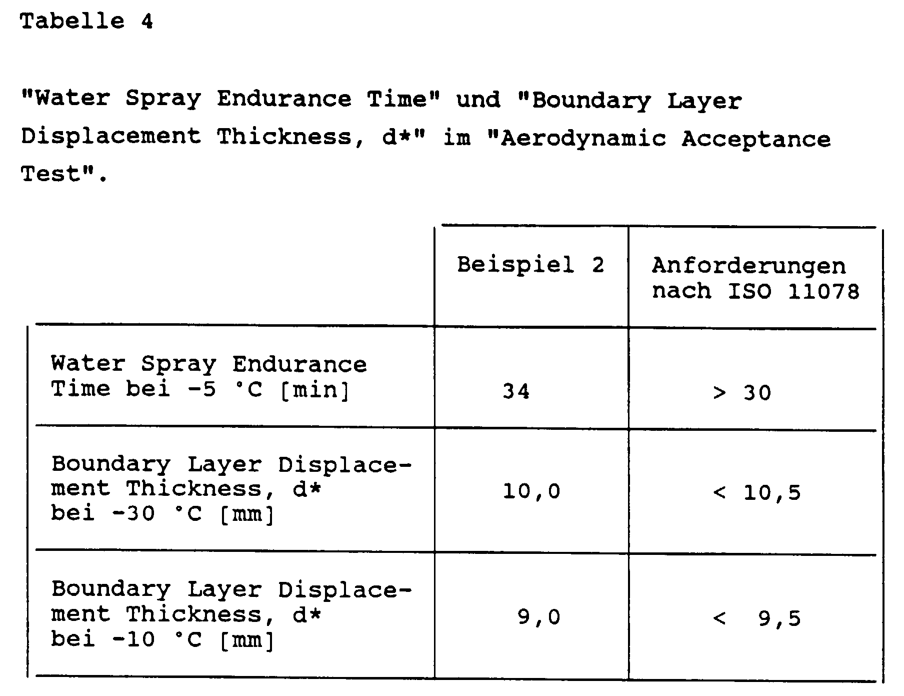

### Vergleichsbeispiel

Es wurde ein Typ-II-Flugzeugenteisungsmittel mit der folgenden Zusammensetzung und gemäß folgendem Vorgehen hergestellt:

| | |
|---|---|
| 51,00 Gew.-% | 1,2-Propylenglykol |
| 0,05 Gew.-% | Benzotriazol |
| 0,40 Gew.-% | Dodecylbenzolsulfonat-Natriumsalz |
| 0,10 Gew.-% | Fettalkoholethoxylat mit 12 bis 14 C-Atomen im Fettalkohol und mit 2 mol Ethylenoxid ethoxyliert |
| 0,30 Gew.-% | vernetzte Polyacrylsäure |
| 0,086 Gew.-% | Natriumhydroxid |
| 0,017 Gew.-% | Kaliumhydroxid |
| 48,047 Gew.-% | Wasser. |

Die Polyacrylsäure sowie Benzotriazol und die Tenside wurden im Wasser durch starkes Rühren bei 20 °C gelöst. Anschließend wurde das 1,2-Propylenglykol zugegeben und mit Natrium- und Kaliumhydroxid (jeweils in Form einer etwa 10gew.%igen wäßrigen Lösung) der pH-Wert auf 7 bis 7,4 eingestellt.

Das erhaltene Enteisungsmittel wurde wie in Beispiel 1 getestet. Die Ergebnisse sind in den nachstehenden Tabellen 5 und 6 zusammengefaßt:

**Tabelle 5**

| Viskositätswerte bei 0 °C und 0,084, 0,84, 8,4 und 16,8 s⁻¹ Schergeschwindigkeit und Abnahme der Viskosität bei den genannten ansteigenden Schergeschwindigkeiten, ausgedrückt in Prozent, bezogen auf den Viskositätswert bei 0,084 s⁻¹ Schergeschwindigkeit. | | | | |
|---|---|---|---|---|
| Schergeschwindigkeit [s⁻¹] | 0,084 | 0,84 | 8,4 | 16,8 |
| Viskosität [mPas] | 3800 | 1700 | 790 | 620 |
| Viskositätsabnahme [%] | 0 | 55,3 | 79,2 | 83,7 |

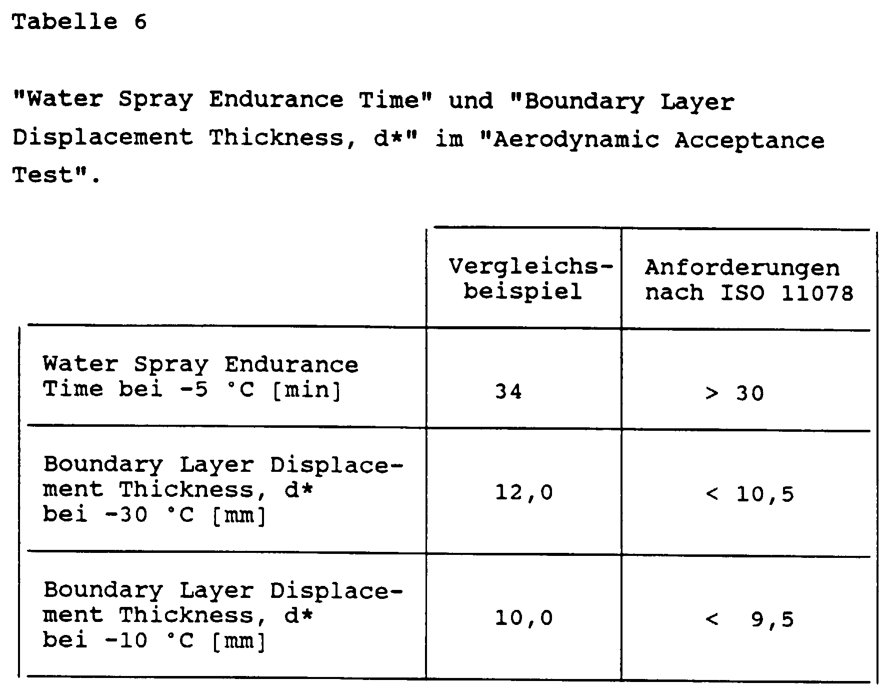

## Patentansprüche

1. Enteisungs- und Vereisungsschutzmittel für Flugzeuge auf der Basis von Glykolen und Wasser und mit wasserlöslichen vernetzten Acrylpolymeren als Verdicker, dadurch gekennzeichnet, daß der Verdicker ein wasserlösliches vernetztes Copolymer ist, bestehend im wesentlichen aus 85 bis 99 Gew.-% polymerisierten Einheiten von Acrylsäure oder Methacrylsäure und 1 bis 15 Gew.-% von einem Ester oder Amid der Acrylsäure oder Methacrylsäure, wobei letztere durch die Formeln 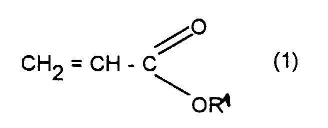 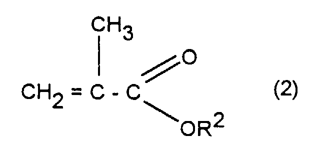 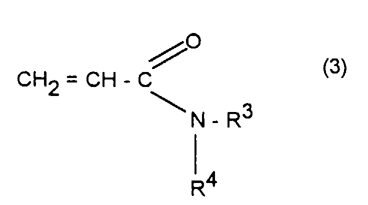 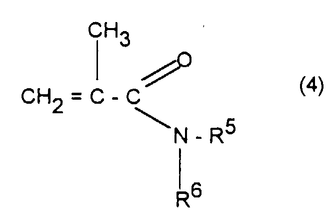 wiedergegeben werden, in denen
R¹, R², R³, R⁵ C₆- bis C₂₂-Alkyl
R⁴, R⁶ einen Alkylrest mit 1 bis zu 4 Kohlenstoffatomen bedeuten.

2. Mittel nach Anspruch 1, dadurch gekennzeichnet, daß der Verdicker ein wasserlösliches vernetztes Copolymer ist, bestehend im wesentlichen aus 75 bis 98,99 Gew.-% von polymerisierten Einheiten der Acrylsäure oder Methacrylsäure 1 bis 15 Gew.-% von polymerisierten Einheiten von einem Ester oder Amid der Acrylsäure oder Methacrylsäure und 0,01 bis 10 Gew.-% von polymerisiertem Vernetzer, Gewichtsprozente bezogen auf das Copolymere.

3. Mittel nach einem oder mehreren der Ansprüche 1 und/oder 2, dadurch gekennzeichnet, daß der Alkylrest oder die Alkylreste jeweils 10 bis 18 C-Atome aufweisen.

4. Mittel nach einem oder mehreren der Ansprüche 1 bis 3, dadurch gekennzeichnet, daß es 0,05 bis 1,5 Gew.-% wasserlösliches vernetztes Copolymer enthält, Gewichtsprozente bezogen auf das Enteisungsmittel.

5. Mittel nach einem oder mehreren der Ansprüche 1 bis 4, dadurch gekennzeichnet, daß es als weitere Komponenten mindestens ein Tensid aus der Gruppe der Fettalkoholalkoxylate und Arylalkylsulfonate, mindestens einen Korrosionsinhibitor für Flüssigkeiten auf der Basis von Glykolen und Wasser und mindestens eine basische Verbindung zur Einstellung eines pH-Wertes von 7 bis 11 in einer jeweils wirksamen Menge enthält.

6. Mittel nach Anspruch 1, dadurch gekennzeichnet, daß es im wesentlichen besteht aus
a) 35 bis 70 Gew.-% von mindestens einem Glykol aus der Gruppe der Alkylenglykole mit 2 bis 3 C-Atomen und Oxalkylenglykole mit 4 bis 6 C-Atomen,
b) 0,05 bis 1,5 Gew.-% von mindestens einem wasserlöslichen vernetzten Copolymeren als Verdicker, bestehend im wesentlichen aus polymerisierten Einheiten von Acrylsäure oder Methacrylsäure in einer Menge von 85 bis 99 Gew.-% und polymerisierten Einheiten von einem Ester oder Amid der Acrylsäure oder Methacrylsäure mit einem C₆- bis C₂₂-Alkylrest in der Estergruppe und einem oder zwei C₆- bis C₂₂-Alkylresten in der Amidgruppe in einer Menge von 1 bis 15 Gew.-%
c) 0,02 bis 1,5 Gew.-% von mindestens einem Tensid aus der Gruppe der Fettalkoholalkoxylate und Arylalkylsulfonate,
d) 0,01 bis 1 Gew.-% von mindestens einem Korrosionsinhibitor für Flüssigkeiten auf der Basis von Glykolen und Wasser,
e) mindestens eine basische Verbindung zur Einstellung eines pH-Wertes von 7 bis 11 und
f) Wasser als Rest auf 100 Gew.-%,
Gewichtsprozente bezogen auf das Enteisungsmittel.

7. Mittel nach Anspruch 6, dadurch gekennzeichnet, daß das Fettalkoholalkoxylat ein Fettalkoholethoxylat mit 1 bis 10 Ethylenoxid-Einheiten ist.

8. Mittel nach Anspruch 6, dadurch gekennzeichnet, daß der Alkylrest oder die Alkylreste im Ester oder Amid jeweils 10 bis 18 C-Atome aufweisen und das Fettalkoholalkoxylat ein Fettalkoholethoxylat mit 1 bis 5 Ethylenoxid-Einheiten ist.

## Claims

1. A de-icing and anti-icing composition for aircraft which is based on glycols and water and contains water-soluble crosslinked acrylic polymers as thickener, wherein the thickener is a water-soluble crosslinked copolymer essentially comprising from 85 to 99% by weight of polymerized units of acrylic acid or methacrylic acid and from 1 to 15% by weight of an ester or amide of acrylic acid or methacrylic acid, the latter being represented by the formulae 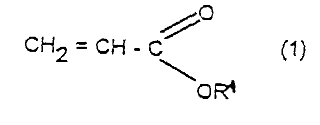 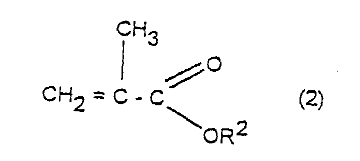 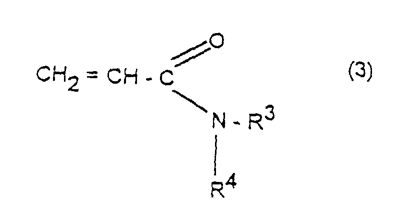 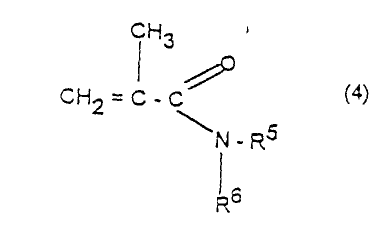 in which
R¹, R², R³ and R⁵ are C₆- to C₂₂-alkyl
R⁴ and R⁶ are an alkyl radical having 1 up to 4 carbon atoms.

2. A composition as claimed in claim 1, wherein the thickener is a water-soluble crosslinked copolymer essentially comprising from 75 to 98.99% by weight of polymerized units of acrylic acid or methacrylic acid, from 1 to 15% by weight of polymerized units of an ester or amide of acrylic acid or methacrylic acid and from 0.01 to 10% by weight of polymerized crosslinking agent, percentages by weight being based on the copolymer.

3. A composition as claimed in one or more of claims 1 and/or 2, wherein the alkyl radical or the alkyl radicals has or each have 10 to 18 carbon atoms.

4. A composition as claimed in one or more of claims 1 to 3, which contains from 0.05 to 1.5% by weight of water-soluble crosslinked copolymer, percentages by weight being based on the de-icing composition.

5. A composition as claimed in one or more of claims 1 to 4, which contains as additional components at least one surfactant from the group consisting of fatty alcohol alkoxylates and arylalkylsulfonates, at least one corrosion inhibitor for liquids based on glycols and water and at least one basic compound for establishing a pH of from 7 to 11, in a quantity which is effective in each case.

6. A composition as claimed in claim 1, which essentially comprises
a) from 35 to 70% by weight of at least one glycol from the group consisting of alkylene glycols having 2 to 3 carbon atoms and oxyalkylene glycols having 4 to 6 carbon atoms,
b) from 0.05 to 1.5% by weight of at least one water-soluble crosslinked copolymer as thickener, essentially comprising polymerized units of acrylic acid or methacrylic acid in an amount of from 85 to 99% by weight and polymerized units of an ester or amide of acrylic acid or methacrylic acid with a C₆- to C₂₂-alkyl radical in the ester group and one or two C₆- to C₂₂-alkyl radicals in the amide group in an amount of from 1 to 15% by weight,
c) from 0.02 to 1.5% by weight of at least one surfactant from the group consisting of fatty alcohol alkoxylates and arylalkylsulfonates,
d) from 0.01 to 1% by weight of at least one corrosion inhibitor for liquids based on glycols and water,
e) at least one basic compound for establishing a pH of from 7 to 11, and
f) water as the remainder to 100% by weight,
percentages by weight being based on the de-icing composition.

7. A composition as claimed in claim 6, wherein the fatty alcohol alkoxylate is a fatty alcohol ethoxylate having 1 to 10 ethylene oxide units.

8. A composition as claimed in claim 6, wherein the alkyl radical or the alkyl radicals in the ester or amide has or each have 10 to 18 carbon atoms and the fatty alcohol alkoxylate is a fatty alcohol ethoxylate having 1 to 5 ethylene oxide units.

## Revendications

1. Agent de dégivrage et de protection contre le givre pour avions à base de glycols et d'eau et comportant des polymères acryliques réticulés hydrosolubles en tant qu'épaississants, caractérisés en ce que l'épaississant est un copolymère réticulé insoluble dans l'eau, constitué essentiellement de 85 à 99 % en poids d'unités polymérisées d'acide acrylique ou d'acide méthacrylique et de 1 à 15 % en poids d'un ester ou amide de l'acide acrylique ou de l'acide méthacrylique, les derniers pouvant être représentés par les formules 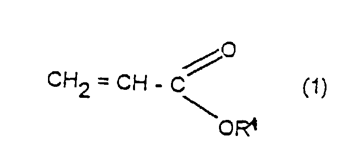 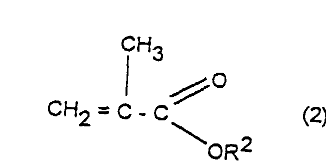 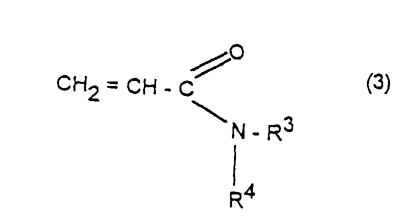 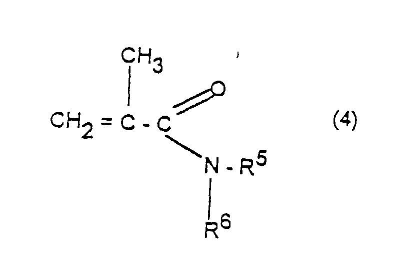
R¹, R², R³, R⁵ représentent des groupes alkyle en C₆-C₂₂,
R⁴, R⁶ représentent un reste alkyle avec 1 à 4 atomes de carbone.

2. Agent selon la revendication 1, caractérisé en ce que l'épaississants est un copolymère réticulé hydrosoluble, constitué essentiellement de 75 à 98,99 % en poids d'unités polymérisées de l'acide acrylique ou de l'acide méthacrylique, de 1 à 15 % en poids d'unités polymérisées d'un ester ou amide de l'acide acrylique ou de l'acide méthacrylique et de 0,01 à 10 % en poids d'agent réticulant polymérisé, les pourcentages en poids sont relatifs au copolymère.

3. Agent selon une ou plusieurs des revendications 1 et/ou 2, caractérisé en ce que le reste alkyle ou les restes alkyle présentent à chaque fois de 10 à 18 atomes de carbone.

4. Agent selon une ou plusieurs des revendications 1 à 3, caractérisé en ce qu'il contient de 0,05 à 1,5 % en poids de copolymère réticulé hydrosoluble, les pourcentages en poids sont relatifs à l'agent de dégivrage.

5. Agent selon une ou plusieurs des revendications 1 à 4, caractérisé en ce qu'il contient, comme autres composants, au moins un agent de surface pris dans le groupe des alkoxylates d'alcools gras et des arylalkylsulfonates, au moins un inhibiteur de corrosion pour des liquides à base de glycols et d'eau et au moins un composé basique pour l'établissement d'un pH dans l'intervalle de 7 à 11 à chaque fois dans une quantité efficace.

6. Agent selon la revendication 1, caractérisé en qu'il est constitué essentiellement de
a) de 35 à 70 % en poids d'au moins un glycol pris dans le groupe des alkylèneglycols avec 2 à 3 atomes de carbone et des oxalkylèneglycols avec 4 à 6 atomes de carbone,
b) de 0,05 à 1,5 % en poids d'un copolymère réticulé hydrosoluble en tant qu'épaississant constitué essentiellement d'unités d'acide acrylique ou d'acide méthacrylique dans une quantité de 85 à 99 % en poids et d'unités polymérisées d'un ester ou amide d'acide acrylique ou d'acide méthacrylique avec un reste alkyle en C₆-C₂₂ dans le groupe ester et un ou deux restes alkyle en C₆-C₂₂ dans le groupe amide dans une quantité de 1 à 15 % en poids,
c) de 0,02 à 1,5 % en poids d'au moins un agent de surface pris dans le groupe des alkoxylates d'alcools gras et des alkylarylsulfonates,
d) de 0,01 à 1 % en poids d'au moins un inhibiteur de corrosion pour des liquides à base de glycols et d'eau,
e) d'au moins un composé basique pour l'établissement du pH de 7 à 11, et
f) de l'eau en quantité suffisante pour 100 %,
les pourcentages en poids sont relatifs à l'agent de dégivrage.

7. Agent selon la revendication 6, caractérisé en ce que l'alkoxylate d'alcool gras est un éthoxylate d'alcool gras avec 1 à 10 unités d'oxyde d'éthylène.

8. Agent selon la revendication 6, caractérisé en ce que le reste alkyle ou les restes alkyle dans l'ester ou l'amide présentent à chaque fois de 10 à 18 atomes de carbone et l'alkoxylate d'alcool gras est un éthoxylate d'alcool gras avec 1 à 5 unités oxyde d'éthylène.
